(19) Europäisches Patentamt / European Patent Office / Office européen des brevets

(11) EP 3 722 930 A1

(12) **EUROPEAN PATENT APPLICATION**
published in accordance with Art. 153(4) EPC

(43) Date of publication:
14.10.2020 Bulletin 2020/42

(51) Int Cl.:
*G06F 3/041* (2006.01)

(21) Application number: 18885208.1

(22) Date of filing: 24.10.2018

(86) International application number:
PCT/CN2018/111758

(87) International publication number:
WO 2019/109750 (13.06.2019 Gazette 2019/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.12.2017 CN 201711292251
08.12.2017 CN 201721696554 U

(71) Applicant: Shanghai Zhonglian Technologies Ltd.,
Co
Shanghai 201419 (CN)
(72) Inventors:
• ZHONG, Guanghua
  Jiangxi 330008 (CN)
• SONG, Gang
  Jiangxi 330008 (CN)

(74) Representative: Ridderbusch, Oliver
Prisma IP
Patentanwaltskanzlei
Landshuter Allee 10
80637 München (DE)

(54) **OPERATION RECOGNITION APPARATUS, OPERATION RECOGNITION METHOD, AND SMART TERMINAL HAVING THE APPARATUS**

(57) The present invention provides an operation recognition apparatus and method, and a smart terminal having the device. The operation recognition apparatus comprises an operation receiving unit, a scanning array composed of at least one driving channel and at least one sampling channel, and at least one signal reading unit; the driving channels and the sampling channels intersect to form at least one electrical node, and the signal reading units are connected with all the sampling channels and configured to acquire electric signals on all the sampling channels; the signal sources are connected with the respective driving channels and send electric signals to all the driving channels at the same time, wherein the electric signals of at least two driving channels are at different frequencies; and each signal reading unit comprises at least one band-pass filter for acquiring the electric signals of each sampling channel. By means of the technical solution, the delay of operation recognition is effectively reduced, and the operation recognition efficiency is improved. The operation recognition apparatus is suitable for an input device of a scanning array type and particularly suitable for applications in the field of touch screens and touch panels.

FIG. 3

## Description

## TECHNICAL FIELD

The present invention relates to the field of operation recognition, and more particularly to an operation recognition apparatus and method, and a smart terminal having the device.

## BACKGROUND

Regardless in industrial production, in commercial applications or in daily life, most electronic products have human-computer interaction functions to receive user's input operations through input devices. Common input devices include keyboards, touch screens, etc. Such input devices have a common feature of working in an array scanning mode.

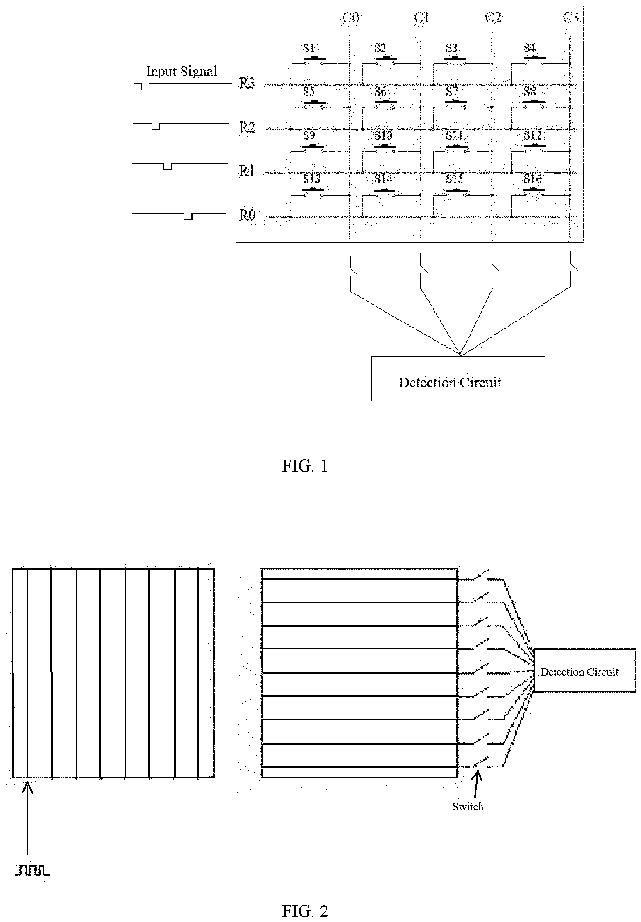

FIG. 1 is a schematic diagram of a keyboard array. The keyboard array includes row channels R0-R3 and column channels C0-C3. Each row channel intersects with all column channels to form 16 electrical nodes. 16 keys are provided, each key being connected to the row channel and the column channel on the corresponding electrical node. The working steps of the keyboard array are as follows:

1. inputting signals to a row channel, for example setting the row channel to a high level or a low level;
2. reading a level state of each column channel by a detection circuit in sequence to check if a signal or level has been received, wherein if a signal is received, it is indicated that a key in the current row and column is pushed; and if no signal or level is received, it is represented that no key in the current row and column is pushed;
3. scanning each row and each column one by one in sequence, until all rows and columns have been traversed, which represents the completion of a scanning cycle; and
4. repeating the scanning in this way, and continuously detecting the key pushing operation.

The scanning principle of a touch screen is similar to the keyboard array, wherein row channels and column channels for sensing touch operations are provided inside the touch screen and are scanned row by row and column by column. When the above various arrays are scanned, all row channels or column channels are often traversed in a sequence of channel positions in a scanning cycle.

FIG. 2 is a topology diagram of a scanning array. In FIG. 2, column channels which work as a driving circuit and receive input signals are provided on the left side; and row channels which are detected by the detection circuit are provided on the right side. Each scanned row channel is provided with a switch through which only one row channel is selected for state detection at the same moment.

The technical solution in the prior art has the disadvantage that a relatively long process is required to scan the entire array and to traverse each row and each column. There is a certain delay in the response to a key pushing operation or a touch operation, and a position where a user operates cannot be found immediately. If encountering the worst case, i.e., when the user operates, a row or a column is just missed at the position corresponding to the operation, then the user's touch event cannot be found till next cycle occurs, such that the delay will be longer. For application scenarios having very high requirements on the response time, such as playing games, these delays will reduce the user experience.

Therefore, how to reduce the time for recognizing user operations and improve the efficiency of operation recognition is a technical problem that needs to be solved.

## SUMMARY

In order to overcome the technical defects, an object of the present invention is to provide an operation recognition apparatus capable of shortening an operation recognition delay, an operation recognition method based on the operation recognition apparatus, and a smart terminal having the operation recognition apparatus.

The present invention provides an operation recognition apparatus, which comprises an operation receiving unit, a scanning array composed of at least one driving channel and at least one sampling channel, and at least one signal reading unit; the driving channels and the sampling channels intersect to form at least one electrical node, and the signal reading units are connected with all the sampling channels and acquire electric signals on all the sampling channels; the operation recognition apparatus further comprises at least one signal source; the signal sources are connected with the respective driving channels and send electric signals to all the driving channels at the same time, wherein the electric signals of at least two driving channels are at different frequencies; each signal reading unit comprises at least one band-pass filter for acquiring the electric signals of each sampling channel; after the operation receiving unit receives a user operation, at least one electrical node on the scanning array corresponding to the user operation is turned on, and the driving channels and the sampling channels, which correspond to the electrical node being turned on, form an electrical pathway; the signal reading units acquire the electric signals on all sampling channels, determine the positions of the electrical pathways according to the sampling channels where the acquired electric signals are located and the frequencies of the electric signals, thereby recognizing the position of the user operation.

Preferably, the number of the signal reading units is equal to the number of the sampling channels, and the signal reading units are arranged in one-to-one correspondence to the sampling channels.

Preferably, in case of one signal reading unit, the operation recognition apparatus further comprises a set of change-over switches, and each sampling channel is connected to the signal reading unit through a change-over switch; and the signal reading unit acquires the electric signals of each sampling channel one by one through the change-over switch.

Preferably, a frequency interval of the electric signals on every two adjacent driving channels is greater than a frequency threshold.

Preferably, the operation receiving unit is a key; the user operation is a pushing operation; and the signal source sends electric signals of different frequencies to each driving channel at the same time.

Preferably, the operation receiving unit is a touch screen; the user operation is a touch operation; and the signal source sends electric signals of different frequencies to each driving channel at the same time.

Preferably, the operation recognition apparatus further comprises an analog-to-digital converter which is connected to the signal reading unit and configured to convert the electric signal into a digital signal including an area of a touch operation region and pixel point information.

An operation recognition method is implemented on the basis of an operation recognition apparatus, wherein the operation recognition apparatus comprises an operation receiving unit, a scanning array composed of at least one driving channel and at least one sampling channel, and at least one signal reading unit; the driving channels and the sampling channels intersect to form at least one electrical node, and the signal reading units are connected to all the sampling channels and acquire electric signals on all the sampling channels; the operation recognition method comprises the following steps:

S101: sending electric signals of different frequencies to all the driving channels at the same time by signal sources in the operation recognition apparatus, wherein the electric signals of at least two driving channels are at different frequencies;

S102: when the operation receiving unit receives a user operation, turning on the electrical node at a position on the scanning array corresponding to the user operation, wherein the driving channels and the sampling channels, which correspond to the electrical node being turned on, form an electrical pathway;

S103: acquiring the electric signals of each sampling channel by the signal reading unit;

S104: recognizing the frequencies of the electric signals of each sampling channel; and

S105: determining the position of the electrical pathway according to the sampling channels where the electric signals acquired in step S103 and step S104 are located and the frequencies of the electric signals, so as to recognize the position of the user operation.

Preferably, the number of the signal reading units is equal to the number of the sampling channels, and each of the signal reading units comprises at least one band-pass filter; in step S103, all signal reading units acquire the electric signals of the corresponding sampling channels at the same time; in step S104, each signal reading unit filters the electric signals of each sampling channel into at least two frequency ranges through the band-pass filter and recognizes the electric signals.

Preferably, in case of one signal reading unit, the operation recognition apparatus further comprises a set of change-over switches, and each sampling channel is connected to the signal reading unit through a change-over switch; and in step S103, the signal reading unit acquires the electric signals of each sampling channel one by one through the change-over switch.

Preferably, each signal reading unit comprises at least one band-pass filter; in step S104, each signal reading unit filters the electric signals of each sampling channel into at least two frequency ranges through the band-pass filter and recognizes the electric signals.

Preferably, in step S104, the electric signals of each sampling channel are converted into spectrum parameter by Fourier transform, and the electric signal amplitude corresponding to each frequency in step S101 is recognized.

Preferably, in step S101, the signal source sends electric signals of different frequencies to each driving channel at the same time.

Preferably, the operation recognition apparatus cyclically performs steps S101 to S105 according to a scanning cycle.

Preferably, the operation receiving unit is a touch screen; the user operation is a touch operation; the operation recognition apparatus further comprises an analog-to-digital converter; and the operation recognition method further comprises:

S106: converting the electric signal into a digital signal including an area of a touch operation region and pixel point information by the analog-to-digital converter.

The present invention further discloses a smart terminal which comprises the above-mentioned operation recognition apparatus.

After the above-mentioned technical solutions are adopted, compared with the prior art, the present invention has the following beneficial effects:

1. the delay of operation recognition is effectively reduced, and the efficiency of operation recognition is improved; and

2. The operation recognition apparatus is suitable for an input device of a scanning array type and particularly suitable for applications in the fields of touch screens and touch panels.

## BRIEF DESCRIPTION OF THE DRAWINGS

FIG. 1 is a schematic diagram of a keyboard array in the prior art;

FIG. 2 is a topology diagram of a scanning array in the prior art;

FIG. 3 is a structural diagram of an operation recognition apparatus in a preferred embodiment in accordance with the present invention;

FIG. 4 is a structural diagram of an operation recognition apparatus in another preferred embodiment in accordance with the present invention;

FIG. 5 is a schematic flowchart of an operation recognition method in a preferred embodiment in accordance with the present invention; and

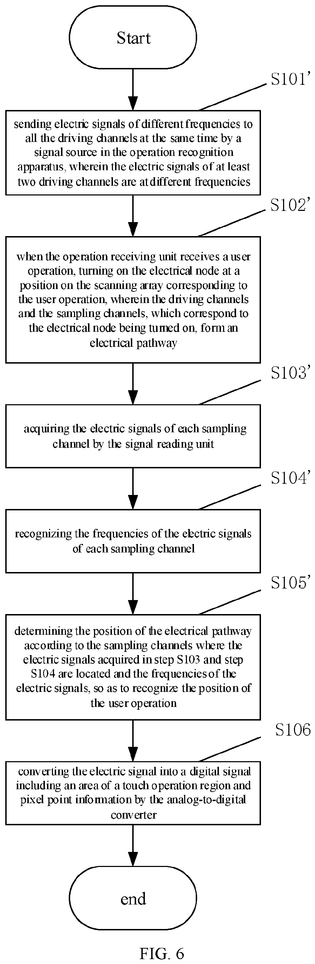

FIG. 6 is a schematic flowchart of an operation recognition method in another preferred embodiment in accordance with the present invention.

Reference symbols represent the following components:

10-scanning array; 101-driving channel; 102-sampling channel; 103-electrical node; 11-operation receiving unit; 12-signal reading unit; 121-band-pass filter; 13-signal source; 14-analog-to-digital converter; 15-change-over switch.

## DETAILED DESCRIPTION

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

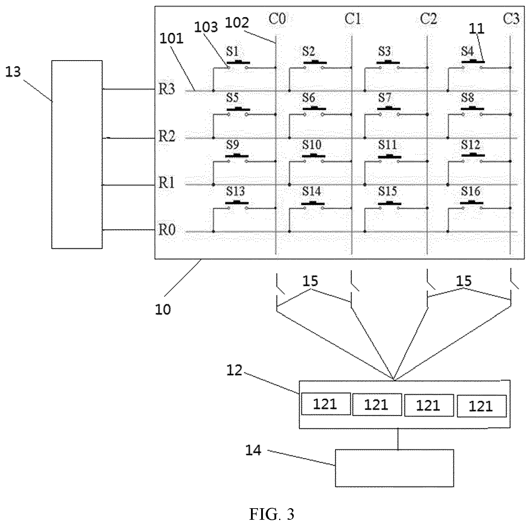

FIG. 3 is a structural diagram of an operation recognition apparatus in a preferred embodiment in accordance with the present invention. The operation recognition apparatus comprises an operation receiving unit 11, a scanning array 10, signal reading units 12, and signal sources 13.

The operation receiving unit 11 is configured to receive a user operation. The operation receiving unit 11 may be a device such as a key of a keyboard, a touch layer of a touch screen, a button of a control console, or the like, which is in direct contact with a user. In FIG. 3, the operation receiving units 11 are keys S1 to S16. The number of the operation receiving units 11 is determined according to the requirements of the operation recognition apparatus on application occasions. For example, a functional mobile phone is often designed to have a keyboard with 9 keys, and a keyboard of a desk computer is designed to have 101 keys. A corresponding number of buttons are provided for an industrial device according to operation requirements, and a touch screen or touch pad on a device such as a smart phone or a tablet computer is a whole touch layer.

The scanning array 10 may be a conductive circuit in the keyboard array, or may also be a conductive layer on the touch screen. The scanning array 10 is composed of at least one driving channel 101 and at least one sampling channel 102. The driving channels 101, as R0 to R3 in FIG. 3, receive external electric signals. The sampling channels 102, as C0 to C3 in FIG. 3, are configured to detect whether there is an electric signal. The driving channels 101 may be row channels or column channels. When the driving channels 101 are row channels or column channels, the sampling channels 102 are correspondingly column channels or row channels, thereby achieving the intersection of the two channels. The driving channels 101 and the sampling channels 102 do not necessarily have to meet the vertical distribution in the physical sense, and can be arranged into different geometric shapes such as polylines and curves according to actual needs. For example, the sizes of some keys on a computer keyboard are inconsistent, such that the corresponding row channels or column channels are not necessarily distributed along straight lines perpendicular to each other. The number of the driving channels 101 and the number of the sampling channels 102 depend on the requirements of application occasions. For example, the number of the driving channels 101 on a large touch screen or touch panel can be up to 20 or more, while a keyboard on a calculator only needs 4-5 driving channels 101.

Each of the driving channels 101 intersects with all the sampling channels 102 to form electrical nodes 103. The electrical nodes 103 are not turned on when the operation recognition apparatus does not receive a user operation. For example, in the case of four driving channels 101 and four sampling channels 102, that is, a $4 \times 4$ scanning array 10, there are 16 electrical nodes 103 in total. The operation receiving unit 11 is physically connected to the scanning array 10. For example, when the scanning array 10 is a keyboard array, the operation receiving units 11 are keys. Each key corresponds to one electrical node 103, and two ends of each key are respectively connected to the driving channels 101 and the sampling channels 103, which correspond to the electrical node 103 where the key is located. When a key is pushed, the electrical node 103 corresponding to this key is turned on. In FIG. 3, the key S1 is connected to C0 and R3, and corresponds to the electrical node 103 formed by the intersection of C0 and R3. For another example, when the scanning array 10 is a conductive layer of a touch screen, the conductive layer can also be regarded as that different ITO conductive circuits are etched from two ITO coatings. Patterns etched on the two ITO coatings are perpendicular to each other, one of the patterns being horizontal and the other being vertical. The ITO is an abbreviation of Indium Tin Oxide. The operation receiving unit 11 is a touch layer covering the conductive layer, such as a composite glass screen.

When the touch layer receives an external touch operation, it will cause a change in capacitance or resistance on the conductive layer, thereby realizing the detection of the user operation.

The signal reading units 12 are connected to all the sampling channels 102 and configured to acquire electric signals on all the sampling channels 102. Each signal reading unit 12 may be a detection circuit capable of detecting the electric signals on the sampling channel 102 and determining whether the operation receiving unit 11 corresponding to the electrical node 103 on the sampling channel 102 receives the user operation according to the state of the electric signal. Either one or a plurality of signal reading units 12 is provided.

Each signal source 13 is connected to each driving channel 101 and configured to send electric signals to all the driving channels 101 at the same time, wherein the electric signals of at least two driving channels 101 are at different frequencies. Different from the prior art, in the present invention, the signal sources 13 provide electric signals for the driving channels 101. In the prior art, the electric signals on the driving channels 101 are often digital logic levels. However, in the present invention, each signal source 13 provides electric signals of different frequencies, thereby ensuring that the electric signals of at least two driving channels 101 are at different frequencies. For example, in FIG. 3, the signal source 13 provides an electric signal of 1 kHz for R0 and an electric signal of 2 kHz for R1. Each electric signal may be a sine wave, a sawtooth wave, a square wave, or other waveform with periodic characteristics. The signal source 13 may be a signal generator, or may be electric signals of different frequencies obtained by performing frequency division by a clock circuit in the operation recognition apparatus. The signal source 13 may provide electric signals of different frequencies for all driving channels 101, that is, the frequencies of the electric signals of each driving channel 101 are different. The signal sources may also provide hybrid electric signals, i.e., provide electric signals of different frequencies for only a part of the driving channels 101, and still provide digital logic level signals for the remaining driving channels 101.

In the present invention, each signal reading unit 12 comprises at least one band-pass filter 121 configured to acquire the electric signals of each sampling channel 102. In order to recognize electric signals of different frequencies emitted from the signal sources 13, each signal reading unit 12 comprises at least one band-pass filter 121. The band-pass filter is a device that allows waves of a specific frequency band to pass while shielding other frequency bands. For example, an RLC oscillation circuit is an analog band-pass filter. Still taking FIG. 3 as an example, each signal source 13 sends electric signals of 1KHz and 2KHz to R0 and R1 in the driving channel 101, respectively. If a key S9 or S13 is pushed, C0 in the sampling channel 102 may receive the electric signal of 1KHz or 2KHz, which needs to be filtered or recognized by the band-pass filter 121. For example, the band-pass filter 121 allows the electric signal of 1 kHz to pass, then the signal reading unit 12 detects whether the electric signal passes at the output end of the band-pass filter 121. If the electric signal of 1KHz is detected, it means that the key S13 is pushed. If the electric signal of 1KHz is not detected, it means that the key S13 is not pushed. The band-pass range and the number of the bandpass filters 121 are determined according to the settings of the scanning array 10 and the signal sources 13. For example, if there are four driving channels 101 respectively having electric signals of different frequencies, at least four band-pass filters 121 working in different frequency bands are needed to meet recognition needs. The band-pass filters 121 may be arranged in parallel. The signal reading units 12 detect the electric signals from the output ends of different band-pass filters 121, respectively.

The working principle of the operation recognition apparatus is as follows: after the operation receiving unit 11 receives a user operation, at least one electrical node 103 at a position on the scanning array 10 corresponding to the user operation is turned on, and the driving channels 101 and sampling channels 102, which correspond to the electrical node 103 being turned on, form an electrical pathway; the signal reading units 12 acquire the electric signals on all sampling channels 102, determine the positions of the electrical pathways according to the sampling channels 102 where the acquired electric signals are located and the frequencies of the electric signals, thereby recognizing the position of the user operation. The user operation may be a pushing operation, a touch operation, or the like according to the difference in the operation receiving unit 11.

Specifically, the signal source 13 in FIG. 3 sends electric signals of 1KHz, 2KHz, 3KHz, and 4KHz to the driving channels 101, namely, R0, R1, R2, and R3 at the same time. When the user pushes the key S11, the key S11 turns on the driving channels 101 and the sampling channels 102 which are connected to the key S11, that is, turns on R1 and C2. In this way, R1 and C2 form an electrical pathway. The electric signal of 2KHz from the signal source 13 is acquired by the signal reading unit 12 through R1 and C2. At least three of the band-pass filters 121 in the signal reading unit 12 respectively filter the electric signals of 1KHz, 2KHz, 3KHz and 4KHz that may exist on C0 to C3. Finally, the electric signal of 2KHz is detected at C2, so it can be concluded that R1 and C2 are combined, and finally it is recognized that the user has pushed the key S11. Even if the user pushes at least two keys at the same time, due to the different frequencies of the electric signals of different drive channels 101, such user operation can also be recognized. For example, if the user pushes the key S9 and the key S14 at the same time, the signal reading unit 12 can acquire an electric signal of 2KHz on C0 and an electric signal of 1KHz on C1, thereby realizing the co-existence of two electrical pathways of C0 and R1, C1 and R0, and further recognizing that the user has pushed the key S9 and the key S14 at the same time. The operation recognition apparatus of the touch screen structure has the same working principle as above, and also recognizes the position of the user operation by determining the frequencies of the electric signals on different sampling channels 102.

In some embodiments, when the signal source 13 only sends electric signals of different frequencies to some of the driving channels 101, for example, only sends electric signals with frequencies to R0 and R1, digital logic levels are still sent for R2 and R3 in a time-sharing manner. For example, the signal source 13 first sends electric signals of 1 kHz and 2 kHz to R0 and R1 at the same time, and then sends high levels to R2 and R3 at different moments, respectively. Then, the signal reading unit 12 performs electric signal recognition in two manners. When the signal source 13 sends electric signals with frequencies to R0 and R1, C0 to C3 are scanned, and filtered and recognized through the band-pass filter 121. When the signal source 13 sends logic levels to R2 and R3, respectively, the logic level signals on C0 to C3 are respectively acquired. Correspondingly, the number of the band-pass filters 121 is also consistent with the number of the driving channels 101 that receive electric signals of different frequencies. If the working time for the four driving channels 101 in the prior art is 8 milliseconds in total, that is, one scanning cycle is 8 milliseconds, an average of 2 milliseconds is required for each driving channel. However, in this embodiment, the electric signals are sent to R0 and R1 at the same time, such that the time is compressed by 2 milliseconds. It takes a total of 6 milliseconds to complete the electric signal supply for all driving channels 101, which saves 2 milliseconds compared to the prior art. In view of a wide range of applications, the above-mentioned method compresses the time for the driving channels 101 that receive the electric signals with frequencies to receive the electric signals one by one. Compared with the prior art, the time that can be saved is described as follows: the number of the driving channels 101 that receive the electric signals with frequencies is N, the total number of the driving channels 101 is M, and then the saved time

$$\frac{N-1}{M}$$

is of the scanning cycle in the prior art. This embodiment has the advantages that the balance of cost and performance is comprehensively considered, the requirements on the number of the channels of the signal sources 13 and the number of the band-pass filters 121 are not high, and the internal space structure of the operation recognition apparatus is also saved.

In the embodiment as shown in FIG. 3, in the case of one signal reading unit 12, the operation recognition apparatus further comprises a set of change-over switches 15, and each sampling channel 102 is connected to the signal reading unit 12 through a change-over switch 15; and the signal reading unit 12 acquires the electric signals of each sampling channel one by one through the change-over switch 15. In this embodiment, the sampling channels 102 are detected still in a time-sharing manner. The electric signal of one sampling channel 102 is sampled only at the same time, and different sampling channels 102 are selected through the change-over switches 15 to achieve signal isolation. This embodiment has the advantage of saving the hardware cost because only one signal reading unit 12 is needed.

As a further improvement of the operation recognition apparatus, a frequency interval of the electric signals on every two adjacent driving channels 101 in the scanning array 10 is greater than a frequency threshold. In order to reduce the interference between the adjacent driving channels 101 and improve the recognition rate of the electric signals, the frequencies of the electric signals on the adjacent driving channels 101 must be kept at a sufficient frequency interval, that is, greater than a frequency threshold. The frequency threshold may be determined according to a frequency recognition resolution of the signal reading unit 12. For example, when the frequency recognition resolution of the signal reading unit 12 is 50 Hz, the electric signals of 990 Hz and 1010 Hz cannot be distinguished. Therefore, the frequency threshold should be set to at least 50 Hz, so that the signal reading unit 12 can accurately acquire the frequencies of the electric signals. In addition, in order to effectively use the frequency resources, electric signals with relatively close frequencies can be provided on the driving channels 101 that are far apart. For example, for R0 to R3 in FIG. 3, electric signals of 1KHz, 2KHz, 3KHz, and 1.5KHz can be provided respectively. If R0 is far away from R3, and relatively close frequencies can be selected.

Further, the signal source 13 sends electric signals of different frequencies to each driving channel 101 at the same time. That is, all driving channels 101 receive electric signals with frequencies, which can realize the simultaneous transmission of the electric signals, such that the working time of the driving channels 101 is saved to the greatest extent. The method in the prior art is to supply electric signals to the driving channels 101 one by one, and the required scanning cycle is the accumulation of the working time of all the driving channels 101. However, in the present invention, the electric signals are supplied to all driving channels 101 at the same time, without the need to supply the electric signals to each driving channel 101 separately, thereby saving a lot of time. If the operation recognition apparatus has N driving channels, the scanning cycle required in the present invention is one-Nth of the prior art.

As a further improvement of the operation recognition apparatus, the operation recognition apparatus, when being a touch screen, further comprises an analog-to-digital converter 14 which is connected to the signal reading unit 12 and configured to convert the electric signal into a digital signal including an area of a touch operation region and pixel point information. When the touch screen receives the user's touch operation, the contact position is often a region corresponding to a plurality of pixels points. Therefore, it is necessary to recognize the region area and pixel point information of the user's touch operation. The scanning array 10 of the touch screen can be designed to have relatively dense driving channels 101 and sampling channels 102. Correspondingly, the electrical nodes 103 will also be very dense. When a touch operation occurs, a plurality of electrical nodes 103 will be turned on. The signal reading unit 12 can acquire electric signals of different frequencies on the plurality of sampling channels 102. After the analog-to-digital converter 14 performs analog-to-digital conversion on the electric signals of different frequencies, the range of the electrical pathway corresponding to the same frequency signal can be determined, and the region area and the pixel information of the corresponding touch operation can be further determined. The pixel point information is a specific pixel point coordinate position in the touch operation region. The present invention is applicable to not only the field of touch screens and also other fields, but the application effect is optimal in the field of touch screens.

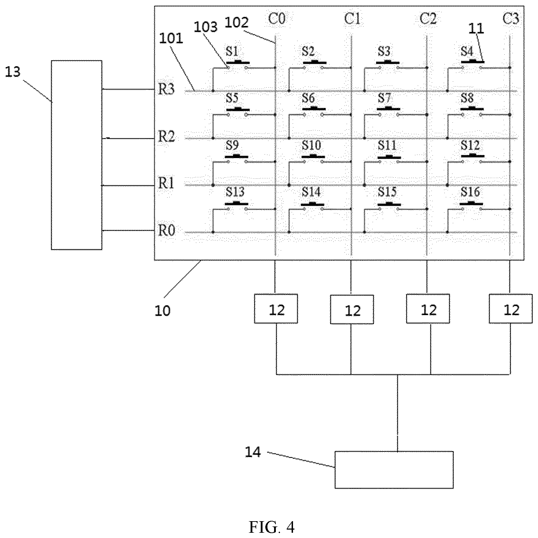

FIG. 4 is a structural diagram of an operation recognition apparatus in another preferred embodiment in accordance with the present invention. In this embodiment, the number of the signal reading units 12 is equal to the number of the sampling channels 102, and the signal reading units 12 are arranged in one-to-one correspondence to the sampling channels 102. Similarly, each signal reading unit 12 comprises at least one band-pass filter 121. The number of the band-pass filters 121 is equal to the number of the driving channels 101 that receive electric signals of different frequencies. In this embodiment, all the signal reading units 12 can work in parallel, without polling and sampling all the sampling channels 102 separately, thereby saving the sampling time. If there are X sampling channels 102 in the operation recognition apparatus, this embodiment can further compress the scanning cycle to $\dfrac{1}{X}$ before. If the scanning cycle in the prior art is T, the number of all driving channels 101, which receive electric signals of different frequencies, in the operation identification apparatus in accordance with the present invention is N, the number of the sampling channels is M, and then the scanning cycle in the present invention is $\dfrac{T}{M \times N}$.

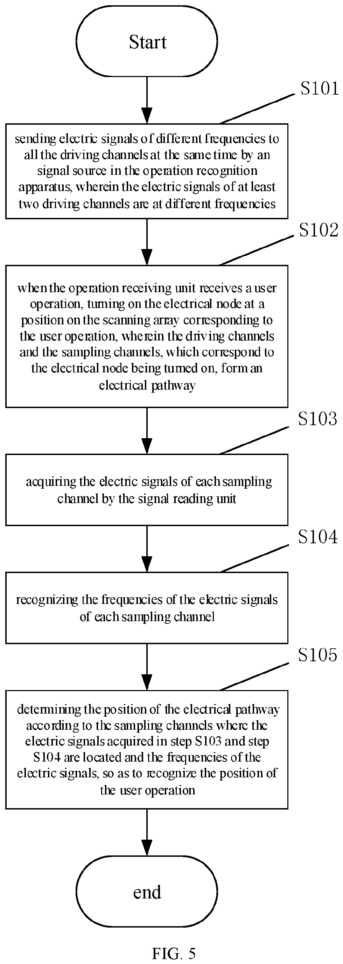

FIG. 5 is a schematic flowchart of an operation recognition method in a preferred embodiment in accordance with the present invention. The operation recognition method is implemented on the basis of an operation recognition apparatus. The operation recognition apparatus comprises an operation receiving unit 11, a scanning array 10 composed of at least one driving channel 101 and at least one sampling channel 102, and at least one signal reading unit 12. The driving channels 101 and the sampling channels 102 intersect to form at least one electrical node 103, and the signal reading units 12 are connected with all the sampling channels 102 and acquire electric signals on all the sampling channels 102. The operation recognition method comprises the following steps:

S101: sending electric signals of different frequencies to all the driving channels 101 at the same time by a signal source 13 in the operation recognition apparatus, wherein the electric signals of at least two driving channels 101 are at different frequencies.

The operation recognition apparatus comprises a signal source 13 that provides electric signals of different frequencies to ensure that the electric signals of at least two driving channels 101 are at different frequencies. Each electric signal may be a sine wave, a sawtooth wave, a square wave, or other waveform with periodic characteristics. The signal source 13 may provide electric signals of different frequencies for all driving channels 101, that is, the frequencies of the electric signals of each driving channel 101 are different. The signal source may also provide hybrid electric signals, i.e., provide electric signals of different frequencies for only a part of the driving channels 101, and still provide digital logic level signals for the remaining driving channels 101.

S102: When the operation receiving unit 11 receives a user operation, turning on the electrical node 103 at a position on the scanning array 10 corresponding to the user operation, wherein the driving channels 101 and the sampling channels 102, which correspond to the electrical node 103 being turned on, form an electrical pathway.

The user operation may be a pushing operation, a touch operation, or the like according to the difference in the operation receiving unit 11. After the operation receiving unit 11 receives a user operation, the operation receiving unit 11 causes a physical change on the scanning array 10, and at least one electrical node 103 at a position on the scanning array 10 corresponding to the user operation is turned on. The driving channels 101 and the sampling channels 102, which correspond to the electrical node 103 being turned on, form an electrical pathway. The electric signals propagate in the electrical pathway from the driving channels 101 to the sampling channels 102.

S103: Acquiring the electric signals of each sampling channel 102 by the signal reading unit 12.

The signal reading unit 12 acquires electric signals on all sampling channels 102. With respect to the sampling manner of each sampling channel 102, one sampling manner is to arrange a corresponding signal reading unit 12 for each sampling channel 102, and all the signal reading units 12 simultaneously acquire the electric signals; another manner is to use one signal reading unit 12 and select the sampling channels 102 one by one by means of change-over switches 15 to acquire the electric signals. The signal reading unit 12 has a detection circuit therein, which can detect an analog signal or a digital signal.

S104: Recognizing the frequencies of the electric signals of each sampling channel 102.

In this step, the frequencies of the electric signals on each sampling channel 102 detected in step S103 are recognized. For example, for C0 to C3 in FIG. 3, the frequencies of the electric signals on the four sampling channels 102 are recognized respectively. The recognition of the frequencies can be achieved through the sampling principle. That is, the electric signals are detected through a higher sampling frequency, and the detection results are then "patched together" to form a complete waveform, wherein the sampling frequency is at least twice the frequency of the electric signal. For example, when the electric signal on the sampling channel 102 is 2 kHz, the sampling frequency is at least 4 kHz. The higher the sampling frequency, the higher the accuracy, and the more similar the degree of restoration of the electric signal. When the electric signals on the same sampling channel 102 may have a plurality of frequencies, hardware or software may be used to separate different frequencies in a time domain or a frequency domain.

S105: Determining the position of the electrical pathway according to the sampling channel 103 where the electric signals acquired in step S103 and step S104 are located and the frequencies of the electric signals, so as to recognize the position of the user operation.

If the signal reading unit 12 can acquire the electric signals by using the change-over switch 15, i.e., only corresponding to one sampling channel 102 at the same moment, the sampling channel 102 is determinable, and the numbers of the sampling channels 102 may be determined according to the timing of their detection one by one. If the signal reading units 12 are in one-to-one correspondence to the sampling channels 102, the signal reading units 12 may be numbered. That is, if a signal reading unit 12 detects an electric signal, the sampling channel 103 corresponding to the signal reading unit 12 has an electric signal. If an electric signal of a corresponding frequency is detected from a sampling channel 102, it means that the sampling channel 102 that detects the electric signals constitutes an electrical pathway, and the frequency range of the electric signal is also determined. However, the frequencies of the electric signals of the driving channel 101 are determined, so the driving channels 101 and the detection channels 102, which correspond to the electrical pathway where the electric signals are detected, can be locked to acquire a position of the electrical pathway. The electrical node 103 corresponding to each electrical pathway is unique, and the position corresponding to the electrical node 103 is the position of the user operation.

In some embodiments of the present invention, the content of the step S103 varies depending on the number setting of the signal reading units 12. When the number of the signal reading units 12 is equal to the number of the sampling channels 102, the signal reading units 12 are arranged in a one-to-one correspondence to the sampling channels, and each of the signal reading units 12 comprises at least one band-pass filter 121. In step S103, all the signal reading units 12 acquire the electric signals of the corresponding sampling channels at the same time. In step S104, each signal reading unit filters the electric signals of each sampling channel into at least two frequency ranges through the band-pass filter and recognizes the electric signals. In this embodiment, the electric signals on the same sampling channels 102 are filtered into electric signals on a plurality of frequency bands by using the band-pass filters 121. For example, when the band-pass filters 121 which are in parallel are used, the output end of each band-pass filter 121 outputs an electric signal of a corresponding frequency band, thereby realizing separation processing of electric signals of different frequencies on the same sampling channel 102. Since the signal reading units 12 work without interfering with each other, the electric signals of the sampling channels 102 can be detected at the same time. Therefore, it is not necessary to detect the sampling channels 102 one by one, thereby greatly improving the recognition speed.

In case of one signal reading unit 12, the operation recognition apparatus further comprises a set of change-over switches 15, and each sampling channel 102 is connected to the signal reading unit 12 through a change-over switch 15; and in step S103, the signal reading unit 12 acquires the electric signals of each sampling channel 102 one by one through the change-over switch 15.

In order to recognize the frequencies of different electric signals on the same sampling channel 102 in the case of one signal reading unit 12, the signal reading unit 12 comprises at least one band-pass filter 121. In step S104, each signal reading unit 12 filters the electric signals of each sampling channel 102 into at least two frequency ranges through the band-pass filter 121 and recognizes the electric signals. In this embodiment, hardware is still used to solve the problem of recognizing electric signals of different frequencies on the same sampling channel 102.

In other embodiments of the present invention, in order to recognize the frequencies of different electric signals on the same sampling channel 102 in case of one signal reading unit 12, in step S104, the electric signals of each sampling channel are converted into spectrum parameters by Fourier transform, and the electric signal amplitude corresponding to each frequency in step S101 is recognized. The Fourier transform is an integral transform, which is derived from the Fourier integral representation of a function, and the periodic function can be developed into a Fourier series under certain conditions. In the field of communications, the Fourier transform has a pivotal role of converting a complex signal into a superposition of a plurality of sine waves of different frequencies and amplitudes to obtain a signal spectrum. The frequency spectrum includes signal amplitudes at different frequencies, that is, spectrum parameters. In view of the present invention, there may be two or more electric signals of different frequencies on the same sampling channel 102, which correspond to the case where the user pushes a plurality of keys at the same time or the touch screen is touched in a plurality of points. The electric signal detected by each signal reading unit 12 is a composite electric signal containing different frequencies. The composite electric signal is converted into spectrum parameters through Fourier transform. Whether or not the electric signal corresponding to the frequency is received is determined by analyzing the amplitudes corresponding to different frequencies in the spectrum parameters. For example, the user pushes two keys at the same time, which send two electric signals, which are 1kHz and 2kHz respectively, to a sampling channel 102. After the spectrum parameters are obtained through Fourier transform, it can be found that the positions corresponding to 1kHz and 2kHz have higher amplitudes. The position amplitudes corresponding to other frequencies are zero or other preset reference voltage values, so that the recognition of electric signals of different frequencies on the same sampling channel 102 is achieved.

Further, in step S101, the signal source 13 sends electric signals of different frequencies to each driving channel 101 at the same time. That is, all driving channels 101 receive electric signals with frequencies, which can realize the simultaneous transmission of the electric signals, such that the working time of the driving channels 101 is saved to the greatest extent. The method in the prior art is to supply electric signals to the driving channels 101 one by one, and the required scanning cycle is the accumulation of the working time of all driving channels 101. However, in the present invention, the electric signals are supplied to all driving channels 101 at the same time, without the need to supply the electric signals to each driving channel 101 separately, thereby saving a lot of time. If the operation recognition apparatus has N driving channels, the scanning cycle required in the present invention is one-Nth of the prior art.

As a further improvement of the operation recognition method, the operation recognition apparatus cyclically performs steps S101 to S105 according to a scanning cycle. The operation recognition apparatus continuously recognizes the user's operation, so the steps S101 to S105 are executed cyclically to provide electric signals of different frequencies continuously to the driving channels 101, acquire the electric signals by the signal reading units 12 and perform frequency recognition, thereby recognizing the position of the user operation.

As a further improvement of the operation recognition method, the operation receiving unit is a touch screen. The user operation is a touch operation. The operation recognition apparatus further comprises an analog-to-digital converter 14. The operation recognition method further comprises:

S106: converting the electric signal into a digital signal including an area of a touch operation region and pixel point information by the analog-to-digital converter 14.

The operation recognition apparatus, when being a touch screen, further comprises an analog-to-digital converter 14 which is connected to the signal reading unit 12 and configured to convert the electric signal into a digital signal including an area of a touch operation region and pixel point information. When the touch screen receives the user's touch operation, the contact position is often a region corresponding to a plurality of pixels points. Therefore, it is necessary to recognize the region area and pixel point information of the user's touch operation. The scanning array 10 of the touch screen can be designed to have relatively dense driving channels 101 and sampling channels 102. Correspondingly, the electrical nodes 103 will also be very dense. When a touch operation occurs, a plurality of electrical nodes 103 will be turned on. The signal reading unit 12 can acquire electric signals of different frequencies on the plurality of sampling channels 102. After the analog-to-digital converter 14 performs analog-to-digital conversion on the electric signals of different frequencies, the range of the electrical pathway corresponding to the same frequency signal can be determined, and the region area and pixel information of the corresponding touch operation can be further determined. The pixel point information is a specific pixel point coordinate position in the touch operation region.

The present invention is applicable to not only the field of touch screens and also other fields, but the application effect is optimal in the field of touch screens.

The present invention further discloses a smart terminal which comprises the above-mentioned operation recognition apparatus. The smart terminal may be a device with a human-machine interaction function, such as a smart phone or a tablet computer, and receives user operations through the operation recognition apparatus.

It should be noted that the embodiments of the present invention have better implementation and do not limit the present invention in any way. Any person skilled in the art may change or modify these embodiments into equivalent effective embodiments by use of the technical content disclosed above. However, any corrections or equivalent changes and modifications made to the above embodiments based on the technical essence of the present invention without departing from the technical solution of the present invention still fall within the scope of the technical solutions of the present invention.

**Claims**

1. An operation recognition apparatus, comprising an operation receiving unit, a scanning array composed of at least one driving channel and at least one sampling channel, and at least one signal reading unit; the driving channels and the sampling channels intersect to form at least one electrical node, and the signal reading unit is connected with all the sampling channels and configured to acquire electric signals on all the sampling channels, wherein the operation recognition apparatus further comprises:

at least one signal source connected to each driving channel and configured to send electric signals to all the driving channels at the same time, wherein the electric signals of at least two driving channels are at different frequencies; each signal reading unit comprises at least one band-pass filter configured to acquire the electric signals of each sampling channel; after the operation receiving unit receives a user operation, at least one electrical node at a position on the scanning array corresponding to the user operation is turned on, and the driving channels and sampling channels, which correspond to the electrical node being turned on, form an electrical pathway; the signal reading unit acquires the electric signals on all sampling channels, determines the position of the electrical pathway according to the sampling channels where the acquired electric signals are located and the frequencies of the electric signals, thereby recognizing the position of the user operation.

2. The operation recognition apparatus according to claim 1, wherein the number of the signal reading units is equal to the number of the sampling channels, and the signal reading units are arranged in one-to-one correspondence to the sampling channels.

3. The operation recognition apparatus according to claim 1, wherein in case of one signal reading unit, the operation recognition apparatus further comprises a set of change-over switches, and each sampling channel is connected to the signal reading unit through a change-over switch; and the signal reading unit acquires the electric signals of each sampling channel one by one through the change-over switch.

4. The operation recognition apparatus according to any one of claims 1 to 3, wherein a frequency interval of the electric signals on every two adjacent driving channels is greater than a frequency threshold.

5. The operation recognition apparatus according to any one of claims 1 to 3, wherein the operation receiving unit is a key; the user operation is a pushing operation; the signal source sends electric signals of different frequencies to each driving channel at the same time.

6. The operation recognition apparatus according to any one of claims 1 to 3, wherein
the operation receiving unit is a touch screen;
the user operation is a touch operation;
the signal source sends electric signals of different frequencies to each driving channel at the same time.

7. The operation recognition apparatus according to claim 6, wherein
the operation recognition apparatus further comprises:
an analog-to-digital converter which is connected to the signal reading unit and configured to convert the electric signal into a digital signal including an area of a touch operation region and pixel point information.

8. An operation recognition method, which is implemented based on an operation recognition apparatus [since the independent claim of the apparatus comprises a band-pass filter, which is not used in the independent claim of method, the technical features in the preamble of the operation recognition apparatus are explained again, instead of citation; the signal source can be used as specific technical features of two independent claims to acquire the unity], wherein the operation recognition apparatus comprises an operation receiving unit, a scanning array composed of at least one driving channel and at least one sampling channel, and at least one signal reading unit; the driving channels and the sampling channels intersect to form at least one electrical node, and the signal reading unit is connected with all the sampling channels and configured to acquire electric signals on all the sampling channels; the operation recognition method comprises the following steps:

S101: sending electric signals of different frequencies to all the driving channels at the same time by a signal source in the operation recognition apparatus, wherein the electric signals of at least two driving channels are at different frequencies;
S102: when the operation receiving unit receives a user operation, turning on the electrical node at a position on the scanning array corresponding to the user operation, wherein the driving channels and the sampling channels, which correspond to the electrical node being turned on, form an electrical pathway;
S103: acquiring the electric signals of each sampling channel by the signal reading unit;
S104: recognizing the frequencies of the electric signals of each sampling channel; and

S105: determining the position of the electrical pathway according to the sampling channel where the electric signals acquired in step S103 and step S104 are located and the frequencies of the electric signals, so as to recognize the position of the user operation.

9. The operation recognition method according to claim 8, wherein
the number of the signal reading units is equal to the number of the sampling channels, and the signal reading units are arranged in one-to-one correspondence to the sampling channels;
each of the signal reading units comprises at least one band-pass filter;
in step S103, all signal reading units acquires the electric signals of the corresponding sampling channels at the same time; and
in step S104, each signal reading unit filters the electric signals of each sampling channel into at least two frequency ranges through the band-pass filter and recognizes the electric signals.

10. The operation processing method according to claim 8, wherein
in the case of one signal reading unit, the operation recognition apparatus further comprises a set of change-over switches, and each sampling channel is connected to the signal reading unit through a change-over switch; and
in step S103, the signal reading unit acquires the electric signals of each sampling channel through the change-over switch one by one.

11. The operation recognition method according to claim 10, wherein
the signal reading unit comprises at least one band-pass filter; and
in step S104, the signal reading unit filters the electric signals of each sampling channel into at least two frequency ranges through the band-pass filter and recognizes the electric signals.

12. The operation recognition method according to claim 10, wherein
in step S104, the electric signals of each sampling channel are converted into spectrum parameters by Fourier transform [when the Fourier transform is used, because the software cannot operate in parallel, it must be ensured that the same frequency corresponds to only one electrical pathway and the electrical pathway is thus combined with the change-over switch as a solution, and therefore, claim 10 is cited], and the electric signal amplitude corresponding to each frequency in step S101 is recognized.

13. The operation recognition method according to any one of claims 8 to 12, wherein

in step S101, the signal source sends electric signals of different frequencies to each driving channel at the same time.

14. The operation recognition method according to any one of claims 8 to 12, wherein
the operation recognition apparatus cyclically performs steps S101 to S105 according to a scanning cycle.

15. The operation recognition method according to any one of claims 8 to 12, wherein
the operation receiving unit is a touch screen;
the user operation is a touch operation;
the operation recognition apparatus further comprises an analog-to-digital converter; and the operation recognition method further comprises:
S106: converting the electric signal into a digital signal including an area of a touch operation region and pixel point information by the analog-to-digital converter.

16. A smart terminal, comprising the operation recognition apparatus according to claim 1.

FIG. 1

FIG. 2

FIG. 3

FIG. 4

Start

S101

sending electric signals of different frequencies to all the driving channels at the same time by an signal source in the operation recognition apparatus, wherein the electric signals of at least two driving channels are at different frequencies

S102

when the operation receiving unit receives a user operation, turning on the electrical node at a position on the scanning array corresponding to the user operation, wherein the driving channels and the sampling channels, which correspond to the electrical node being turned on, form an electrical pathway

S103

acquiring the electric signals of each sampling channel by the signal reading unit

S104

recognizing the frequencies of the electric signals of each sampling channel

S105

determining the position of the electrical pathway according to the sampling channels where the electric signals acquired in step S103 and step S104 are located and the frequencies of the electric signals, so as to recognize the position of the user operation

end

FIG. 5

Start

S101'

sending electric signals of different frequencies to all the driving channels at the same time by a signal source in the operation recognition apparatus, wherein the electric signals of at least two driving channels are at different frequencies

S102'

when the operation receiving unit receives a user operation, turning on the electrical node at a position on the scanning array corresponding to the user operation, wherein the driving channels and the sampling channels, which correspond to the electrical node being turned on, form an electrical pathway

S103'

acquiring the electric signals of each sampling channel by the signal reading unit

S104'

recognizing the frequencies of the electric signals of each sampling channel

S105'

determining the position of the electrical pathway according to the sampling channels where the electric signals acquired in step S103 and step S104 are located and the frequencies of the electric signals, so as to recognize the position of the user operation

S106

converting the electric signal into a digital signal including an area of a touch operation region and pixel point information by the analog-to-digital converter

end

FIG. 6

## INTERNATIONAL SEARCH REPORT

| International application No. |
| --- |
| **PCT/CN2018/111758** |

**A.    CLASSIFICATION OF SUBJECT MATTER**

G06F 3/041(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI; EPODOC; CNKI; CNPAT: 触摸屏, 操作, 识别, 滤波器, 键盘, touch, recognise, keyboard, filter

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 108132728 A (NANCHANG BLACK SHARK TECHNOLOGY CO., LTD.) 08 June 2018 (2018-06-08) <br> claims 1-16 | 1-16 |
| PX | CN 207611366 U (NANCHANG BLACK SHARK TECHNOLOGY CO., LTD.) 13 July 2018 (2018-07-13) <br> description, paragraphs [0012]-[0024] | 1-16 |
| X | CN 102736965 A (FOCALTECH SYSTEMS CO., LTD.) 17 October 2012 (2012-10-17) <br> description, paragraphs [0005]-[0028] | 1-16 |
| A | CN 102902393 A (TPK TOUCH SOLUTIONS INC.) 30 January 2013 (2013-01-30) <br> entire document | 1-16 |
| A | CN 103116434 A (XIAMEN INTERACTIVE TECHNOLOGY CO., LTD.) 22 May 2013 (2013-05-22) <br> entire document | 1-16 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 January 2019** | **23 January 2019** |

| Name and mailing address of the ISA/CN | Authorized officer |
| --- | --- |
| **State Intellectual Property Office of the P. R. China <br> No. 6, Xitucheng Road, Jimenqiao Haidian District, Beijing 100088 <br> China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/111758**

| Patent document cited in search report | | | Publication date (day/month/year) | Patent family member(s) | | | Publication date (day/month/year) |
|---|---|---|---|---|---|---|---|
| CN | 108132728 | A | 08 June 2018 | None | | | |
| CN | 207611366 | U | 13 July 2018 | None | | | |
| CN | 102736965 | A | 17 October 2012 | TW | 201349070 | A | 01 December 2013 |
| | | | | US | 2013314366 | A1 | 28 November 2013 |
| CN | 102902393 | A | 30 January 2013 | TW | 201305880 | A | 01 February 2013 |
| | | | | US | 2013027091 | A1 | 31 January 2013 |
| | | | | EP | 2551753 | A2 | 30 January 2013 |
| | | | | TW | M448019 | U | 01 March 2013 |
| | | | | JP | 2013033455 | A | 14 February 2013 |
| | | | | KR | 20130014347 | A | 07 February 2013 |
| CN | 103116434 | A | 22 May 2013 | None | | | |

Form PCT/ISA/210 (patent family annex) (January 2015)